Europäisches Patentamt

European Patent Office

Office européen des brevets

(19)

(11) Numéro de publication: **0 011 810**

**A1**

(12) # DEMANDE DE BREVET EUROPEEN

(21) Numéro de dépôt: **79104608.9**

(22) Date de dépôt: **20.11.79**

(51) Int. Cl.³: **G 01 S 13/80**
**H 04 B 5/00, A 01 K 5/02**
**A 01 K 11/00**

(30) Priorité: **27.11.78 FR 7833474**

(43) Date de publication de la demande:
**11.06.80 Bulletin 80/12**

(84) Etats Contractants Désignés:
**BE DE FR GB IT LU NL**

(71) Demandeur: **Société Anonyme dite: CGEE ALSTHOM**
**13, rue Antonin Raynaud**
**F-92309 Levallois-Perret(FR)**

(72) Inventeur: **Argant, Daniel**
**10, rue de Fosse Bazin**
**F-92260 Fontenay aux Roses(FR)**

(74) Mandataire: **Weinmiller, Jürgen et al,**
**Zeppelinstrasse 63**
**D-8000 München 80(DE)**

(54) **Système de reconnaissance à distance d'un mobile porteur d'un dispositif répondeur codé.**

(57) Le système entre dans le domaine des automations électroniques.

Système de reconnaissance d'un mobile porteur d'un code d'identification comportant un poste fixe comprenant un générateur d'oscillations (1) à haute fréquence alimentant une bobine de self-induction (3), le mobile comportant un circuit oscillant parallèle (7, 8), caractérisé en ce que ledit générateur fonctionne à fréquence fixe, le circuit oscillant (7, 8) étant le siège d'oscillations reçues par un circuit de détection (9) alimentant des circuits logiques de codage comprenant un sérialisateur (10) et un circuit d'affichage du code (11), le sérialisateur étant cadencé par un signal d'horloge élaboré par un circuit de mise en forme (12) de la tension recueillie aux bornes du circuit oscillant, la sortie du sérialisateur commandant un circuit modulateur (13) agissant sur le coefficient de surtension du circuit oscillant au rythme du code élaboré par le sérialisateur, le poste fixe comportant en outre un circuit de détection (14), de mise en forme (15) et de désérialisation (16) restituant le code sous forme d'un message parallèle.

Le système s'applique en particulier pour l'alimentation rationnelle des vaches.

Croydon Printing Company Ltd.

## Système de reconnaissance à distance d'un mobile porteur d'un dispositif répondeur codé

La présente invention concerne un système de reconnaissance à distance d'un mobile porteur d'un dispositif répondeur codé.

Dans de nombreuses utilisations, en effet, on peut être conduit à reconnaitre un mobile parmi d'autres, chacun des mobiles portant un code qui lui est affecté.

L'approche du mobile porteur du dispositif répondeur, à une distance et à une vitesse dépendant des performances du système adapté, provoque la réception, dans un poste fixe, d'un signal codé donnant l'identité du mobile.Ce signal peut alors être exploité par un automate et en particulier par un système à microprocesseur. On connait de tels systèmes en particulier pour l'alimentation rationnelle des vaches. En particulier, on connait un dispositif dans lequel chaque vache porte un collier comportant un signe d'identification électronique : répondeur avec chiffre-code. Dans le rayon d'action d'un champ électro-magnétique, émis par un émetteur-récepteur central fixe, le répondeur devient émetteur actif si bien que le répondeur n'a aucune énergie. Le chiffre codé reçu par l'émetteur récepteur est retransmis à un ordinateur qui contrôle l'exactitude du chiffre codé et libère le programme prévu spécialement pour l'alimentation de telle vache.

On connait aussi un dispositif dans lequel le couplage entre le poste fixe et les mobiles est réalisé par mutuelle inductance, le poste fixe comportant un générateur à fréquence variable évoluant selon N fréquences distinctes. Les mobiles comportent alors des circuits oscillants réagissant différamment les uns par rapport aux autres. Il en résulte que l'impédance équivalente de l'ensemble poste fixe plus un mobile varie selon le mobile.

Cependant, dans les deux cas, il s'agit d'un système onéreux et surtout de réglage difficile.

La présente invention a pour but de réaliser un dispositif très sûr et simple, et a pour objet un système de reconnaissance à distance d'un mobile porteur d'un dispositif répondeur codé, comportant un poste fixe comprenant un générateur d'oscillation à haute fréquence alimentant une bobine de self-induction, le mobile comportant un circuit oscillant parallèle, caractérisé en ce que ledit générateur fonctionne à fréquence fixe, le circuit oscillant étant le siège d'oscillations reçues par un circuit de détection alimentant des circuits logiques de codage comprenant un sérialisateur et un circuit d'affichage du code, le sérialisateur étant cadencé par un signal d'horloge élaboré par un circuit de mise en forme de la tension recueillie aux bornes du circuit oscillant, la sortie du sérialisateur commandant un circuit modulateur agissant sur le coefficient de surtension du circuit oscillant au rythme du code élaboré par le sérialisateur, le poste fixe comportant en outre un circuit de détection, de mise en forme et de désérialisation restituant le code sous forme d'un message parallèle.

L'invention sera mieux comprise à la lumière de la description d'un exemple de réalisation de l'invention faite ci-après, en regard du dessin annexé dans lequel :

La figure 1 donne une représentation schématique du dispositif selon l'invention.

La figure 2 est un schéma montrant la partie portée par le mobile.

La figure 3 montre un détail de la figure 2.

La figure 4 montre en détail certaines parties de la figure 1.

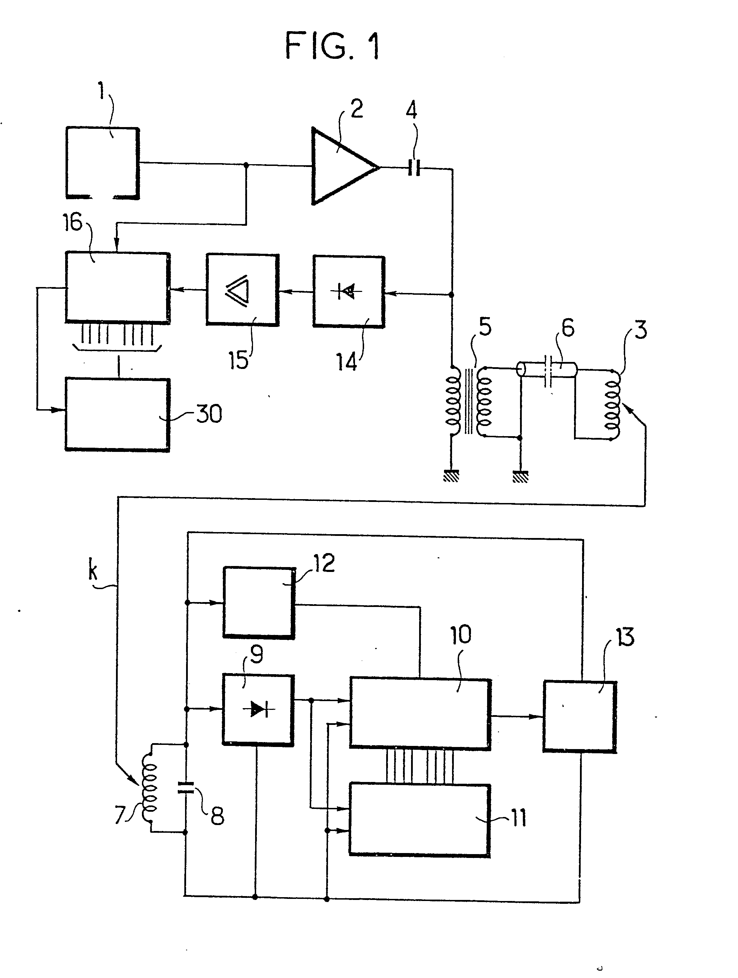

En se reportant à la figure 1, le poste fixe comprend un générateur d'oscillations 1 suivi d'un amplificateur de puissance 2. Cet amplificateur 2 fournit à une bobine de self-induction 3 par l'intermédiaire d'un condensateur d'accord 4, d'un transformateur d'adaptation d'impédance 5 et d'un câble de liaison coaxial 6, une énergie réactive transformée par la bobine 3 en champ électromagnétique à haute fréquence.

Le mobile porte un circuit oscillant comprenant une bobine de self-induction 7 et un condensateur 8. Ce circuit est le siège d'oscillations forcées qui sont détectées par un circuit de détection 9 servant à l'alimentation d'un circuit logique de codage comprenant un circuit sérialisateur 10 et un circuit d'affichage du code 11. Un circuit de mise en forme 12 de la tension sinusoïdale recueillie aux bornes du condensateur 8 élabore un signal d'horloge cadençant le circuit sérialisateur 10. Ce circuit sérialisateur 10 commande un modulateur 13 qui agit sur le coefficient de surtension du circuit oscillant 7-8 par la mise en parallèle sur le condensateur 8 d'une résistance au rythme du code élaboré par le circuit sérialisateur 10.

La modulation a pour effet de faire varier dans de grandes proportions le courant $I_2$ circulant dans le circuit oscillant 7-8 et provoque, par réaction due au coefficient de couplage k entre la bobine 3 et la bobine 7, une variation du courant $I_1$ circulant dans la boucle primaire. On recueille donc au poste fixe une modulation $\Delta$ V aux bornes de la bobine 3. Cette modulation est détectée par un circuit de détection 14, mise en forme par un circuit 15 et désérialisée par un circuit 16 qui restitue le code sous la forme d'un message parallèle.

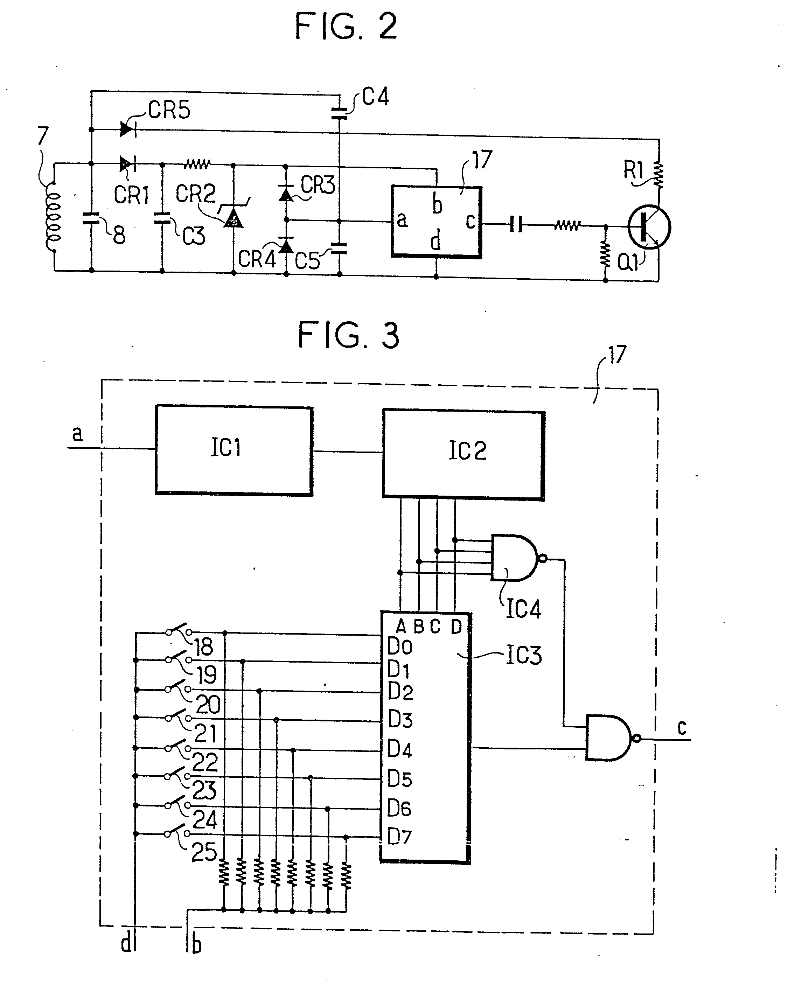

La figure 2 montre plus en détail le schéma de la partie portée par le mobile constituant un répondeur codé. L'exemple est donné pour un message comprenant une unité d'information binaire de départ, huit unités d'information binaire utiles permettant deux cent cinquante six codes différents et sept unités d'information binaire de fin de message.

Ce circuit comporte la bobine 7 et le condensateur 8 constituant, comme il a été dit, un circuit oscillant parallèle accordé. La tension aux bornes du condensateur 8 est redressée, filtrée et stabilisée par les éléments CR1, C3 et CR2 pour assurer l'alimentation de circuits intégrés IC1, IC2, IC3 et IC4 situés dans le rectangle repéré 17 dont le contenu est détaillé sur la figure 3. Les repères a, b, c, d indiquent les points de raccordement de la figure 3 à la place du rectangle 17 de la figure 2.

L'ensemble comporte en outre un diviseur capacitif de la tension sinusoïdale disponible, constitué par des condensateurs C4 et C5. Des diodes CR3 et CR4 assurent la mise en forme du signal servant d'horloge à l'ensemble sérialisateur 17. Les circuits IC1 et IC2 sont des diviseurs de fréquence permettant d'obtenir la vitesse de transmission souhaitée par exemple 2000 bauds dans l'exemple choisi. Le circuit IC3 est un multiplexeur à 8 voies fournissant un code série à huit unités d'information binaire utiles. Des interrupteurs 18 à 25 permettent de choisir le code transmis. Le circuit IC4 permet d'élaborer l'unité d'information binaire de départ.

Le code série en sortie de l'ensemble des circuits contenu dans 17 est alors appliqué à un modulateur constitué par un transistor $Q_1$, une résistance $R_1$ et une diode CR5.

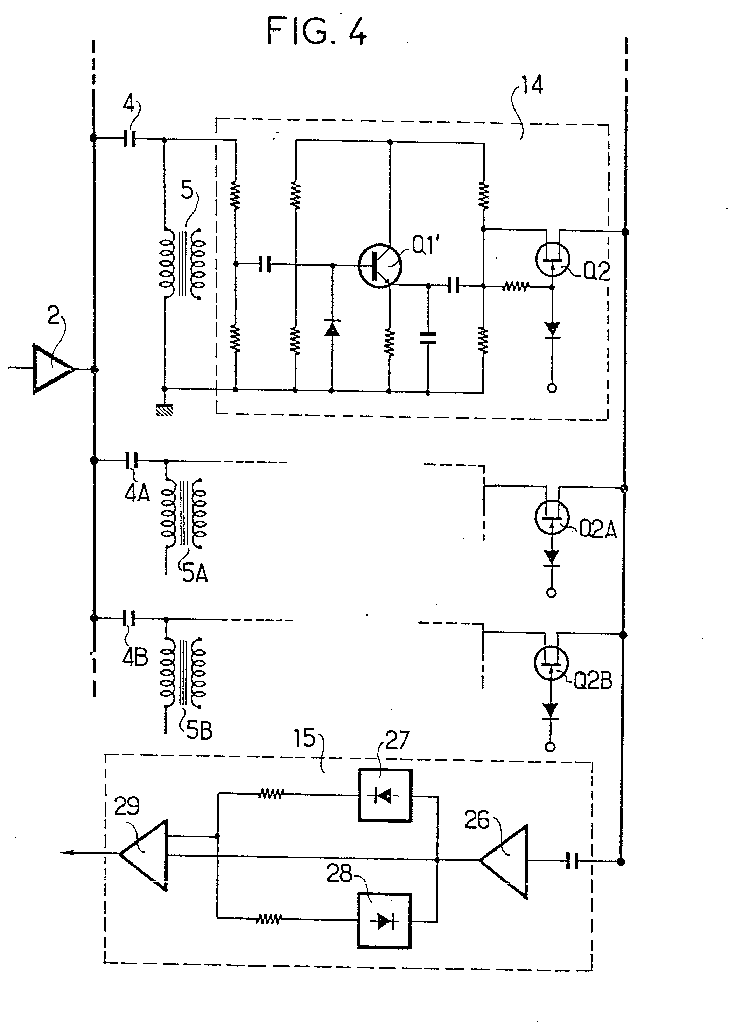

La figure 4 montre les détails du circuit de détection 14 de la figure 1 et du circuit 15 de mise en forme. L'amplificateur de puissance 2 (figure 1) fonctionne en source de tension à très basse impédance de sortie et alimente un ou plusieurs ensembles identiques comprenant chacun la bobine 3, non représentée sur la figure 4, le condensateur 4, le transformateur d'adaptation 5 et le circuit de détection 14 détaillé dans la figure 4.

Les variations de tensions développées par la modulation sont mesurées au niveau du primaire du transformateur d'adaptation 5 à haute impédance supérieure à 10 M $\Omega$ pour ne pas réduire le coefficient de surtension du circuit constitué par la bobine 3 et le condensateur 4.

Un transistor $Q_1'$ réalise un détecteur d'enveloppe et la modulation est recueillie sur son émetteur. Un transistor à effet de champ $Q_2$ fonctionne en multiplexeur et permet de sélectionner un des signaux détectés si plusieurs boucles sont alimentées par le même amplificateur.

Après détection, la modulation est appliquée aux circuits de mise en forme comprenant un amplificateur 26, deux détecteurs de valeurs de crête positive et négative respectivement 27 et 28 et un comparateur 29. Le comparateur 29 reçoit le signal modulé amplifié et la composante continue moyenne du signal détecté. Cet artifice permet d'assurer une restitution correcte du message série sans être affectée par la configuration du message (par exemple une unité d'information binaire de départ à l'état bas suivi de quinze unités d'information binaire à l'état haut).

La sortie du comparateur 29 est reliée au circuit désérialisateur 16 (figure 1). Un dispositif de traitement 30 (figure 1) est programmé selon l'application envisagée. Il peut s'agir d'un microprocesseur.

Une application envisagée pour ce dispositif consiste dans la distribution de nourriture concentrée aux vaches d'un troupeau laitier.

Les élevages modernes de vaches laitières nécessitent le suivi de chacune d'elles en fonction de leur âge, état de santé et de leur

0011810

production laitière.

Des additifs alimentaires concentrés doivent leur être distribués en tenant compte des facteurs ci-dessus.

Un automate à microprocesseur gère pour chacune des vaches le nombre de rations d'un ou plusieurs produits qu'elle peut recevoir chaque jour et surveille un certain nombre de mangeoires toutes équipées d'une boucle excitée en haute fréquence par un même amplificateur de puissance.

Chacune des vaches porte un collier sur lequel est fixé le dispositif répondeur codé (dispositif représenté figure 2 ou figure 1 références 7 à 13). Quand une de celles-ci se présente à une mangeoire, son collier se trouve alors dans le champ électromagnétique émis par la boucle et le numéro de la vache est alors reconnu ; une ration lui est alors fournie automatiquement si un certains temps s'est écoulé après la dernière distribution qu'elle a reçue et si le nombre de rations auxquelles elle a droit le permet.

L'éleveur a la possibilité de programmer, d'une façon simple, le nombre de rations qui doit être fourni à chacune des vaches. Il peut aussi choisir l'intervalle de temps minimal entre deux rations.

Le programme de distribution choisi par l'éleveur peut être reconduit automatiquement toutes les 24 heures à heure fixe (par exemple 0 heure) ou relancé manuellement par celui-ci. L'éleveur a la possibilité de lire à tout instant le nombre de rations non consommées par une vache pour la journée en cours et pour la veille.

L'automate a la possibilité de gérer le fonctionnement de cinq mangeoires à distribution automatique de un ou deux produits avec éventuellement addition d'eau ; chaque mangeoire étant prévue pour vingt cinq à trente vaches.

REVENDICATIONS

1/ Système de reconnaissance à distance d'un mobile porteur d'un dispositif répondeur codé comportant un poste fixe comprenant un générateur d'oscillations (1) à haute fréquence alimentant une bobine de self-induction (3), le mobile comportant un circuit oscillant parallèle (7, 8), caractérisé en ce que ledit générateur fonctionne à fréquence fixe, le circuit oscillant (7, 8) étant le siège d'oscillations reçues par un circuit de détection (9) alimentant des circuits logiques de codage comprenant un sérialisateur (10) et un circuit d'affichage du code (11), le sérialisateur étant cadencé par un signal d'horloge élaboré par un circuit de mise en forme (12) de la tension recueillie aux bornes du circuit oscillant, la sortie du sérialisateur commandant un circuit modulateur (13) agissant sur le coefficient de surtension du circuit oscillant au rythme du code élaboré par le sérialisateur, le poste fixe comportant en outre un circuit de détection (14), de mise en forme (15) et de désérialisation (16) restituant le code sous forme d'un message parallèle.

2/ Système selon la revendication 1, caractérisé en ce que ledit circuit modulateur comprend un transistor dont l'émetteur et le récepteur sont reliés aux bornes du circuit oscillant.

# FIG. 1

# FIG. 2

# FIG. 3

0011810

# FIG. 4

**Office européen des brevets**

**RAPPORT DE RECHERCHE EUROPEENNE**

| | DOCUMENTS CONSIDERES COMME PERTINENTS | | Revendica-tion concernee |
|---|---|---|---|
| Catégorie | Citation du document avec indication, en cas de besoin, des parties pertinentes | | |
| | DE - A - 2 748 584 (NV NEDER-LANDSCHE APPARATENFABRIEK NEDAP) <br><br> * Revendications 1,2,10; de page 3, ligne 1 à page 4, ligne 4; page 4, lignes 14-23; page 5, lignes 3-8; de page 5, ligne 17 à page 6, ligne 22 * <br><br> & FR - A - 2 393 372 (publié le 29-12-1978) <br><br> -- | | 1,2 |
| | FR - A - 2 301 135 (PLESSEY) <br><br> * Page 1, en entier; page 2, lignes 16-24; revendications 1,3-6 * <br><br> -- | | 1 |
| | US - A - 3 964 024 (HUTTON et al. ) <br><br> * Page de garde: le résumé; les figures; colonne 1, lignes 6-19; de colonne 2, ligne 54 à colonne 3, ligne 15; colonne 3, lignes 23-45; colonne 5, lignes 7-46; colonne 6, lignes 4-24; de colonne 6, ligne 60 à colonne 7, ligne 61; colonne 8, lignes 5-34; figures * <br><br> -- | | 1,2 |
| A | US - A - 3 689 885 (KAPLAN et al.) <br><br> * Page de garde, le résumé; figures 1,2; colonne 1, lignes 9-14; colonne 2, lignes 10-33; colonne 3, lignes 44-65; de colonne 7, ligne 36 à colonne 8, ligne 9; de colonne 9, ligne 27 à colonne 10, ligne 55 * <br><br> ---- | | 1 |

**CLASSEMENT DE LA DEMANDE (Int. Cl. 3)**

```
G 01 S  13/80
H 04 B   5/00
A 01 K   5/02
A 01 K  11/00
```

**DOMAINES TECHNIQUES RECHERCHES (Int. Cl. 3)**

```
G 01 S  13/80
H 04 B   1/59
         5/00
G 07 C  11/00
A 01 K   5/02
        11/00
B 61 L  25/04
```

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | | |
|---|---|---|
| X | Le présent rapport de recherche a été établi pour toutes les revendications | |
| Lieu de la recherche La Haye | Date d'achèvement de la recherche 04-03-1980 | Examinateur OLDROYD |

OEB Form 1503.1   06.78